# FASCICULE DE BREVET EUROPEEN

(11) **EP 0 731 542 B1**
(45) Date de publication et mention de la délivrance du brevet: **29.05.2002**
(21) Numéro de dépôt: 96500030.0
(22) Date de dépôt: 08.03.1996
(51) Int. Cl.: H02G 5/06

(54) **Procédé de fabrication de canalisations électriques et canalisation obtenue par ce procédé**
Verfahren zur Herstellung elektrischer Kanalisationen und Kanalisationen hergestellt durch dieses Verfahren
Method for manufacturing electrical conduits and conduits obtained by this method

(30) Priorité: 09.03.1995 ES 9500460
(43) Date de publication de la demande: 11.09.1996
(73) Titulaire: ISOBUSBAR S.L., Santander (Cantabria) (ES)
(72) Inventeur: Abad Calvo, José Luis, 39006 Santander (Cantabria) (ES)
(74) Mandataire: Urizar Anasagasti, Jesus Maria

(56) Documents cités:
- CA-A- 757 683
- DE-U- 1 784 778
- DE-U- 6 932 463
- GB-A- 980 771
- GB-A- 1 104 380
- US-A- 4 246 158
- US-A- 4 702 861
- US-A- 4 804 804
- PATENT ABSTRACTS OF JAPAN vol. 3, no. 19 (C-037), 17 Février 1979 & JP-A-53 141353 (FURUKAWA ELECTRIC CO LTD)
- PATENT ABSTRACTS OF JAPAN vol. 9, no. 324 (C-320), 19 Décembre 1985 & JP-A-60 155250 (SUMITOMO KAGAKU KOGYO)
- PATENT ABSTRACTS OF JAPAN vol. 9, no. 271 (C-311), 29 Octobre 1985 & JP-A-60 118730 (TATSUTA DENSEN KK)
- BROWN BOVERI REVIEW, vol. 73, no. 9, Septembre 1986, BADEN, CH, pages 540-544, XP002002246 H. HAMACHER: "Compact Heavy-Current Busbar Trunking System with Low Electromagnetic Stray Field"

## Description

L'invention concerne un procédé selon la revendication 1 et consistant en une amélioration de la fabrication des canalisations électriques préfabriquées, aptes pour le transport et la distribution d'énergie électrique, aussi bien en basse qu'en moyenne tension et pour toute sorte de tracés ou lignes électriques, aussi bien à des endroits à l'intempérie que sous couvert ou souterrains.

Le brevet allemand DE-U-1784778 représente le premier document que l'on connaît d'une canalisation électrique, c'est-à-dire d'une barre conductrice, recouverte d'une résine isolante, mais elle n'assimile en aucun de ses concepts les caractéristiques mécaniques électriques et de résistance au feu desdits mélanges et/ou composants isolants, ces aspects étant si déterminants que la résistance mécanique aux efforts électrodynamiques causés par un court-circuit dépendra de cette composition, à l'égal de sa résistance en cas d'incendie.

Le brevet espagnol 345057 prévoyait déjà un procédé de fabrication de ces conducteurs, constitués de platines plates qui étaient enveloppées dans une masse isolante composée de résines en polyester et d'agrégats de quartz, moulée avant son séchage pour qu'elle adopte la forme appropriée. Les extrémités de chaque canalisation sont configurées par les extrémités en saillie des platines conductrices qui sont soumises finalement à un procédé de polissage et d'arrondissement des arêtes pour éviter leur détérioration. La connexion mécanique et électrique entre deux unités de canalisation est obtenue au moyen de boulons et les unions sont couvertes ensuite d'une masse isolante de résine de polyester et d'agrégats de quartz.

Le Modèle d'Utilité espagnol 232572 prévoit de même une canalisation électrique de moyenne tension selon laquelle une double enveloppe est appliquée sur les barres conductrices, la première étant en contact direct avec la barre conductrice, tandis que la seconde est déposée sur la précédente et est composée-d'un matériau conducteur électrique qui crée une surface équipotentielle autour des barres.

Le brevet espagnol 521455 concerne un procédé de fabrication de conducteurs électriques canalisés de basse et moyenne tension sur lesquels ce recouvrement enveloppant isolant est composé de poudres d'époxy appliquées aux conducteurs préréchauffés, ou bien par projection de résines de polyester avec fibre de verre à température ambiante.

Finalement le brevet britannique 1104380 et le document japonais 53 141353, décrirent procédés pour l'obtention des éléments d'appareils électriques allant au feu en employant pour cela hydroxyde d'aluminium, chlore ou phosphore. Dans ces documents il ne s'agit pas d'obtenir une canalisation électrique et conséquemment, les correspondants moyens employés et le procédure à suivre pour cette fabrication sont différents du présent cas.

Le procédé ici préconisé consiste à recouvrir les éléments conducteurs (barres plates, tubes ou profilés de n'importe quelle forme, en cuivre, aluminium ou tout autre alliage conducteur) au moyen d'un recouvrement isolant de polyamide en poudre appliqué par des moyens électrostatiques ou par fluidification, avec un préréchauffement éventuel de ces conducteurs afin de faciliter l'adhérence des poudres de polyamide, l'épaisseur de ce revouvrement se situant entre 0,2 et 2 mm, tout cela en fonction de la rigidité diélectrique souhaitée pour la canalisation électrique.

Comme variante, et pour des applications de basse tension exclusivement, on peut réaliser en recouvrement des éléments conducteurs à l'aide d'une gaine de polyamide ou de polyester appliquée par des moyens mécaniques simplement, ayant une épaisseur comprise entre 0,1 et 2 mm, cette épaisseur dépendant de la rigidité diélectrique que l'on souhaite obtenir dans la canalisation.

L'ensemble formé par le ou les conducteur(s) ainsi traité(s), est enfermé à l'intérieur d'une masse isolante formée à partir de résines de polyester bromées ou chlorées et avec des charges minérales dont la granulométrie est àdemi définie, celle-ci étant comprise entre 100 et 1000 microns et les proportions étant variables en fonction de la résistance mécanique souhaitée pour ce second recouvrement isolant, lequel adopte une forme générique d'un parallélépipède dans lequel les conducteurs conformant chaque phase sont séparés par ladite masse isolante, fournissant un haut degré de résistance mécanique et de rigidité diélectrique.

Le mélange isolant de polyester ainsi formé est de plus chargé de trioxyde d'antimoine et d'alumine hydratée pour obtenir un haut degré de résistance au feu, ce qui implique la construction d'une canalisation électrique pratiquement ignifuge avec un degré élevé de résistance mécanique.

On applique de même au mélange un additif d'action "Low Profile" ce qui, uni à la concentration des charges minérales dans le mélange, fournit un niveau de concentration presque nul pendant la polymérisation de la résine ce qui conduit à une réduction des fissures et des propres tensions intérieures et extérieures d'une réaction de ce genre. De cette façon, on obtient une canalisation ayant un haut degré de résistance au feu, sans fissures et sans occlusions intérieures et extérieures éventuelles dues aux tensions produites par la contraction du mélange au moment de se polymériser.

L'union entre les éléments est réalisée par des moyens mécaniques sur la base de boulons de grande qualité et chimiquement traités ainsi que des rondelles coniques et élastiques ayant une grande surface de contact et un couple ou pression de serrage déterminé.

L'union ainsi formée peut être recouverte de la même masse isolante qui couvre le reste du conducteur ou tout autre type de produit chimique conférant a l'ensemble ainsi formé un degré d'isolement et de protection approprié.

Comme variante de ce procédé, on envisage la possibilité de recouvrir cette union d'une couverture isolante qui confère à l'ensemble un degré de protection approprié contre les parties électriquement actives et contre les inclémences mécaniques.

Sur les figures des plans en annexe ont été représentés différents exemples de réalisation de canalisations électriques fabriquées conformément à cette procédure, chacune de ces figures montrant ce qui suit :

La Figure 1 représente une canalisation pour basse tension.

La Figure 2 représente une canalisation pour des applications en basse tension.

La Figure 3 est un système électrique d'application en moyenne tension.

Sur ces figures, les marques de référence suivantes sont employées:
1. Conducteur électrique.
2. Premier isolement des conducteurs.
3. Enveloppe isolante.
4. Support mécanique pour la fixation de divers éléments composant un système électrique.
5. Enveloppe commune de matériau métallique non magnétique.

Pour leur utilisation dans des applications de basse tension, les conducteurs sont logés dans une seule canalisation qui est composée d'une ou plusieurs phases qui, à leur tour, peuvent être formées d'un ou plusieurs conducteurs aux dimensions variables.

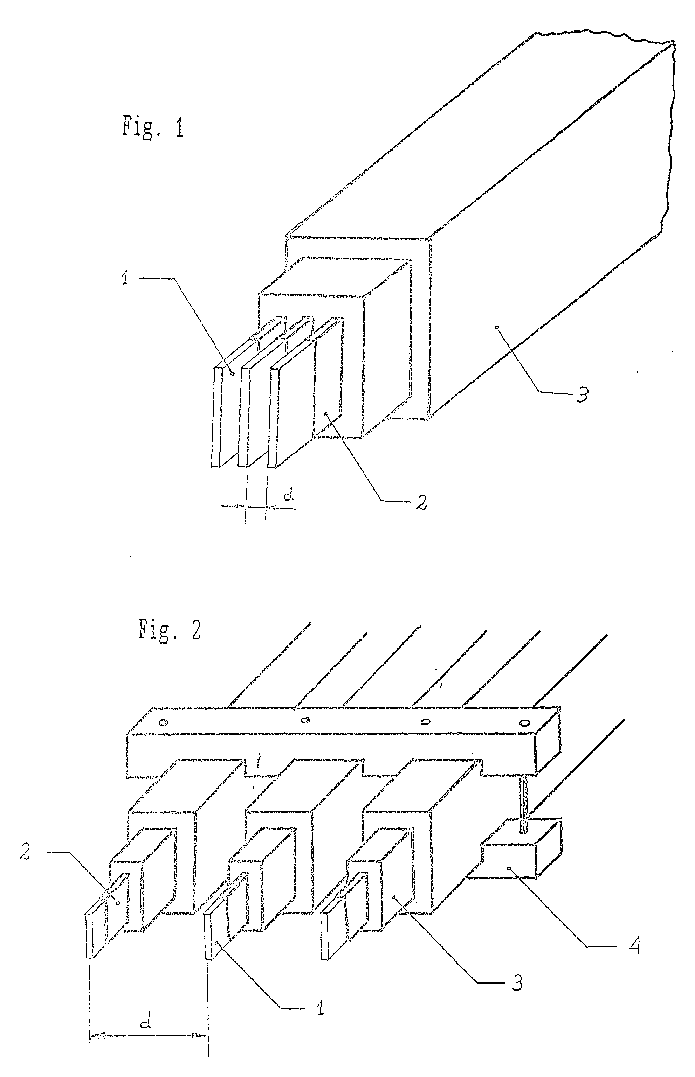

Dans l'exemple montré sur la figure 1, on applique aux conducteurs (1) une première enveloppe isolante constituée de polyamide en poudre appliquée par des moyens électrostatiques ou par fluidification, et les trois conducteurs constitutifs des différentes phases sont renfermés dans une enveloppe commune (3) composée de polyester ayant des charges minérales, des molécules ignifuges et des additifs.

Dans la Figure 2 ces phases ont été fabriquées indépendamment entre elles, chacune comprenant un seul conducteur, l'un avec son isolement correspondant (2) et l'enveloppe isolante (3), étant tous fixés par un moyen mécanique isolant (4) qui leur confère la rigidité, formant ainsi la canalisation, où la distance (d) entre supports de ce moyen mécanique pour la fixation des corps dépend de la résistance des efforts électriques et électrodynamiques requis pour la canalisation.

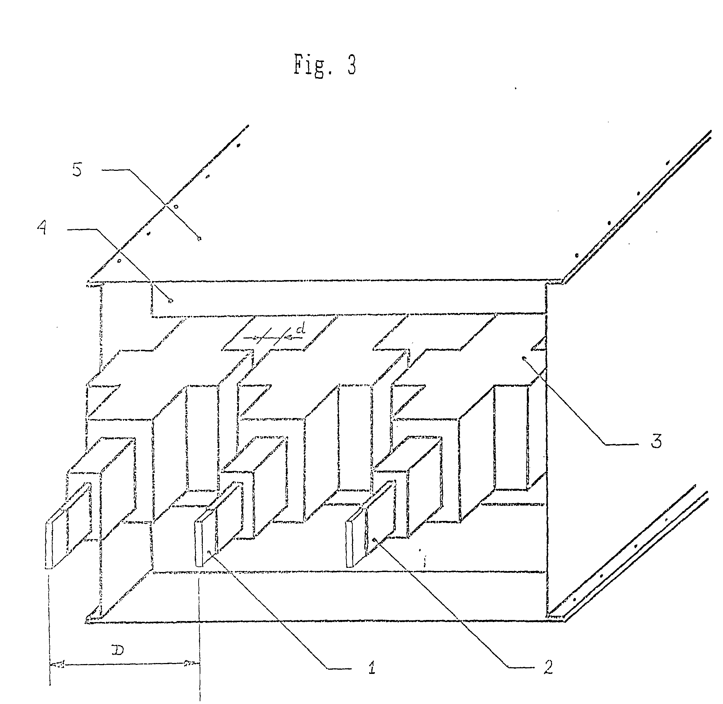

Pour les applications de moyenne tension (voir figure 3), le ou les conducteur(s) (1) qui composent chaque phase sont logés dans des corps isolants indépendants lesquels, au moyen de toute procédure mécanique isolante (4), leur confèrent la rigidité en les maintenant séparés à une distance qui dépend de la tension à supporter par l'ensemble, et qui sont disposés sur un plan longitudinal transversal ou selon toute autre disposition géométrique dans son sens le plus large. La distance (D) entre ces supports mécaniques isolants fournissant la rigidité la canalisation et qui sont soumis par ces corps (4) dépend également de la résistance aux efforts électriques et électrodynamiques requise par la canalisation.

Le mélange isolant qui enveloppe les conducteurs et leur premier isolement, est caractérisé en ce que dans cette application la concentration est exacte et définie de sorte à supprimer les occlusions intérieures et les fissures intermédiaires pouvant à un certain moment faciliter les décharges électriques en dérivant.

Pour cette application, et pour diminuer la résistance électrique aux unions entre éléments et par conséquent la chute de tension aux unions, on applique un traitement superficiel sur les parois de contact entre conducteurs, consistant en une argenture étamée dont l'épaisseur est comprise entre 3 et 10 microns.

L'ensemble polyphasé ainsi formé est recouvert d'une enveloppe métallique d'aluminium non magnétique (5) ou de tout autre matériau conducteur non magnétique afin d'absorber ou réduire les champs magnétiques de dispersion produits par les inductions existantes et les flux antagonistes.

De la même façon, les unions entre éléments sont renfermées dans la même masse isolante qui forme les conducteurs sur la base de résines d'époxy et/ou polyester avec charges minérales, exemptes de fissures et d'occlusions, pour conférer à l'ensemble un plus grand degré de protection sur toute sa longueur. De plus, cette union est protégée par une couverture isolante non métallique à haute résistance mécanique, qui fournit à l'ensemble un plus grand degré de protection.

Des procédures mécaniques permettent également de garantir l'union et la continuité de l'enveloppe métallique conductrice et non magnétique externe, afin de garantir la continuité de l'enveloppe, entre les divers éléments adjacents composant l'installation.

Il n'est pas considéré nécessaire de s'étendre davantage sur cette description pour que tout expert en la matière comprenne l'étendue de l'invention ainsi que les avantages dérivant de celle-ci.

## Revendications

1. Procédé de fabrication de canalisations électriques comprenant au moins une phase formée par un conducteur, de préférence en cuivre ou en tout autre alliage conducteur, et une enveloppe isolante, le procédé comprenant une première étape consistant à couper le conducteur en forme de barre plate et allongée et à le recouvrir d'une première couche de polyamide en poudre, appliquée par des moyens électrostatiques ou en forme de lit fluidifié ou à l'aide d'une graine de polyamide appliquée par des moyens mécaniques et une seconde étape où l'on applique la résine enveloppante, ladite résine étant formée par un mélange isolant à base de résines de polyesther et/ou époxy, avec des charges minérales de quartz, ayant une granulométrie et une composition définies **caractérisé en ce que** le mélange comprend des composants de brome, de chlore, de trioxyde d'antimoine et d'alumine hydratée, cette granulométrie et cette composition conférant à la canalisation une résistance élevée au feu.

2. Procédé selon la première revendication, **caractérisée en ce que** chaque phase est renfermée dans un corps isolant indépendant, l'ensemble des différentes phases étant fixé par un moyen mécanique isolant, dont la résistance dépend des efforts que doit supporter la canalisation formée et **en ce que**, pour des applications de moyenne tension, les conducteurs qui forment chaque phase sont à leur tour recouverts d'une enveloppe commune de matériau conducteur non magnétique qui réduit les pertes dues aux courants et aux tensions induites et les champs magnétiques ainsi créés par l'effet des flux antagonistes et de dispersion.

3. Canalisation électrique obtenue par les procédés selon les revendications 1 et 2.

## Claims

1. A process for the manufacture of electrical conduits comprising at least a phase formed by a conductor, preferably of copper or any other conducting alloy, and an insulating sheath, the process comprising a first stage that consists of cutting the conductor in the form of a flat and elongated bar and in covering it with a first layer of powdered polyamide, applied by electrostatic means or in the form of a fluid bed or with the aid of a polyamide sheath by mechanical means and a second stage in which the enveloping resin is applied, said resin being formed of an insulating mixture with a base of polyester and/or epoxy resins, with mineral quartz loads, having a defined grain size and composition, **characterised in that** the mixture comprises components of bromine, chlorine, antinomy trioxide and hydrated alumina, this grain size and this composition conferring a high resistance to fire on the conduit.

2. A process according to the first claim, **characterised in that** each phase will be enclosed in an independent insulating body, the set of the different phases being fixed by means of an insulating mechanical means, whose resistance depends on the forces that the conduit formed has to support and **in that**, for applications of medium voltage, the conductors that form each phase are in turn coated by a common sheath of conducting non-magnetic material that reduces losses due to the currents and voltages created by the effect of antagonistic flows and dispersion.

3. Electrical conduit obtained by the processes according to claims 1 and 2.

## Patentansprüche

1. Ein Verfahren für die Herstellung von elektrischen Leitungen, daß mindestens eine aus einem Leiter bestehende Phase beinhaltet, vorzugsweise aus Kupfer oder aus jede andere leitende Legierung, und eine Isolierhülle, wobei das Verfahren einen ersten Schritt beinhaltet, in der der Leiter in der Form einer flachen und länglichen Stange zerschnitten wird und mit einer ersten Schicht aus staubförmigen Polyamid bedeckt wird, die durch elektrostatische Mittel oder in Form einer Wirbelschicht oder mit der Hilfe einer Polyamidhülle durch mechanische Mittel angewendet wird und ein zweiter Schritt, in der das umhüllende Harz angewendet wird, wobei sich das besagte Harz aus einer isolierenden Mischung mit einer Grundlage der Polyesterharze und Epoxidharze zusammensetzt, mit einem aus Quarz zusammengesetzten mineralischen Füllstoff, die Harze eine definierte Granulometrie und Zusammensetzung haben, **dadurch gekennzeichnet, daß** die Mischung Bestandteile aus Brom, Chlor, Antimontrioxid und Aluminiumhydroxid beinhaltet, wobei diese Granulometrie und Zusammensetzung der Leitung eine erhöhte Feuerfestigkeit verleihen.

2. Ein Verfahren nach Anspruch 1, **dadurch gekennzeichnet, daß** jede Phase in einem unabhängigen, isolierenden Körper eingeschlossen ist, wobei die Gesamtheit der unterschiedlichen Phasen durch ein mechanisches, isolierendes Mittel angebracht ist, von dessen Bemühungen der Widerstand abhängt, die die gebildete Leitung tragen muss, und daß für die Anwendungen der halben Spannung die Leiter, die jede Phase bilden, ihrerseits durch eine gewöhnliche Hülle aus nicht magnetischem, leitendem Material bedeckt sind, das die Ableitungen reduziert, die durch Ströme und induzierte Spannungen und magnetischen Feldern entstanden sind, die ihrerseits durch den Effekt der entgegengesetzten Stöme und der Zerstreuung enstanden sind.

3. Eine elektrische Leitung, die durch das Verfahren nach Anspruch 1 und 2 erhalten wurde.
